Europäisches Patentamt

European Patent Office

Office européen des brevets

(11) Numéro de publication: **0 493 204 B1**

# (12) FASCICULE DE BREVET EUROPEEN

(45) Date de publication de fascicule du brevet: **09.08.95** (51) Int. Cl.⁶: **C03B 23/033**, C03B 23/035

(21) Numéro de dépôt: **91403449.1**

(22) Date de dépôt: **19.12.91**

(54) **Procédé et dispositif de bombage de feuilles de verre.**

(30) Priorité: **21.12.90 FR 9016177**

(43) Date de publication de la demande:
**01.07.92 Bulletin 92/27**

(45) Mention de la délivrance du brevet:
**09.08.95 Bulletin 95/32**

(84) Etats contractants désignés:
**AT BE CH DE ES FR GB IT LI LU NL SE**

(56) Documents cités:
**EP-A- 0 169 770**
**FR-A- 2 604 425**
**FR-A- 2 604 992**

(73) Titulaire: **SAINT-GOBAIN VITRAGE INTERNA-TIONAL**
**"Les Miroirs"**
**18, avenue d'Alsace**
**F-92400 Courbevoie (FR)**

(72) Inventeur: **Letemps, Bernard**
**5, avenue du Gros Buisson**
**F-60150 Thourotte (FR)**
Inventeur: **Leclercq, Jacques**
**34, rue de Cambrai**
**F-80240 Roisel (FR)**
Inventeur: **Dereims, Philippe**
**19, rue des Domeliers**
**F-60200 Compiegne (FR)**

(74) Mandataire: **Menes, Catherine et al**
**SAINT-GOBAIN RECHERCHE 39, Ouai Lucien Lefranc**
**F-93300 Aubervilliers (FR)**

## Description

L'invention a trait aux techniques de bombage de feuilles de verre dans lesquelles les feuilles de verre sont amenées aux outils de bombage par un convoyeur définissant un plan de transport du verre sensiblement horizontal sur lequel les feuilles de verre défilent à la suite les unes des autres, chauffées au-delà de leur température de ramollissement. Plus précisément, l'invention concerne le problème du positionnement des feuilles de verre par rapport à des outils tels que des outils de bombage. L'invention s'applique par exemple à la production industrielle des vitrages automobiles. De telles techniques sont par exemple décrites dans les demandes de brevet EP-A-0 169 770 et FR-A-2 604 425.

En effet, la demande EP-A-0 169 770 décrit une technique nécessitant le bon positionnement de la feuille de verre vis-à-vis de l'outil de prise en charge. Le document FR-A-2 604 425 propose quant à lui une technique permettant de réorienter une telle feuille de verre.

Maîtriser la qualité de la production d'une ligne de bombage de feuilles de verre suppose être en mesure de garantir que chaque feuille de verre est bien positionnée relativement à l'outil de bombage au moment où celui-ci la prend en charge. Cette opération est assez facile à réaliser lorsqu'elle est effectuée à froid ce qui est le cas par exemple de la plupart des lignes de bombage destinées à la production de vitrages feuilletés où dès l'entrée du four, les feuilles de verre sont posées sur leur cadre de bombage par effondrement. Dans ces cas, la mise en référence est obtenue typiquement par des jeux de butées montés sur les outils de bombage. Mais des précautions bien plus grandes doivent être prises lorsque cette prise en charge est effectuée avec une feuille de verre déjà réchauffée à sa température de bombage et éventuellement de trempe, donc à un moment où sa plasticité et donc sa sensibilité aux chocs et frottements sont maximales.

A froid, à l'entrée du four de réchauffage, la feuille de verre est chargée sur le convoyeur sensiblement horizontal selon une position bien précise. Mais sa trajectoire sur ce convoyeur généralement constitué par un lit de rouleaux, est partiellement aléatoire du moins en considération du fait que dans les cas les plus difficiles par exemple, une précision du positionnement de la feuille de verre de l'ordre du dixième de millimètre peut être requise. Les écarts de trajectoires s'analysent en des glissements perpendiculairement à l'axe du convoyeur et des rotations par rapport à cet axe.

Il est possible de remédier aux glissements perpendiculaires au moyen de règles ou de butées latérales déplacées de manière synchronisée avec le déplacement des feuilles de verre ; un exemple d'un tel système de positionnement latéral est décrit dans la demande de brevet européen EP-A-367 670. Ces systèmes peuvent opérer très progressivement, en douceur, et ne laissent de ce fait aucune empreinte sur le vitrage final. Mais ces systèmes entraînent une usure des revêtements des rouleaux. De plus, dans les fours à rouleaux, on observe généralement que la feuille de verre conserve la position latérale acquise dès l'instant où sa température dépasse le point de ramollissement du verre ce qui se produit normalement au plus tard après qu'elle ait parcouru les deux tiers de son trajet dans le four.

Par contre, les systèmes de positionnement angulaire sont beaucoup moins satisfaisants, même si des perfectionnements importants ont pu être réalisés par le passé. De fait, le problème ne réside pas vraiment dans les systèmes eux-mêmes mais dans le fait que la tendance à une déviation axiale persiste très tardivement, pratiquement jusqu'à la prise en charge par l'outil. Cette tendance s'explique notamment par des glissements sur les rouleaux qui ne peuvent pas être entièrement éliminés car il faut impérativement éviter que les rouleaux ne marquent la feuille de verre de manière indélébile.

Pour minimiser les conséquences de ces déviations angulaires, il est donc impératif d'opérer le centrage correspondant pratiquement à l'instant même de la prise en charge ce qui est gênant à plusieurs titres. Le premier est que l'opération se déroule au moment où, comme indiqué précédemment, la sensibilité au marquage du verre est maximale ; or par définition centrer une feuille de verre c'est agir sur celle-ci et la toucher. Il est certes connu des systèmes tendant à supprimer les conséquences néfastes de ce contact, par exemple qui n'arrêtent pas la feuille de verre mais ne font que la ralentir (EP-A-389 316) ou qui s'escamotent le plus rapidement possible (EP-A-389 317). Mais le coût de ces systèmes est souvent d'autant plus élevé qu'ils sont efficaces et de toute façon, leur sophistication accroît les risques d'un mauvais fonctionnement.

Le second point est que tous ces systèmes sont d'une certaine façon auto-réglés ou plus précisément agissent sur la feuille de verre d'une manière et/ou pendant une durée qui dépendent de la position de la feuille de verre quand elle entre dans leur champ d'action. L'opérateur en charge de la surveillance de la ligne de production n'a pas de moyen d'estimer si cette action est effectuée à bon escient. Il va bien sûr constater dans le cas contraire que les vitrages produits ne sont pas totalement conformes à la consigne fixée mais cette non-conformité peut éventuellement s'expliquer par d'autres causes, un mauvais réglage de cadre de pressage par exemple ou plus généralement de la machine de bombage, de sorte qu'il existe un risque de ne pas identifier immédiatement la source des problèmes et de tout dérégler par une cascade d'actions inappropriées.

Un autre aspect gênant d'un centrage tardif est que dans un certain nombre de cas, la zone de prise en charge est déjà bien encombrée par les outils et les dispositifs afférents ; de plus les systèmes de centrage doivent être escamotés, par exemple pour pouvoir presser la feuille de verre, ce qui là encore multiplie les sources de problèmes. Enfin comme le système de positionnement arrête ou du moins ralentit la feuille de verre, il entraîne une augmentation des temps de cycles, ce qui va à l'encontre des objectifs de cadences élevées, surtout pour les volumes relativement simples.

Les auteurs de la présente invention ont choisi de contourner dans une large mesure ce problème de positionnement angulaire en renonçant à une extrême précision à ce niveau. Ils proposent de bomber une feuille de verre en l'acheminant au travers d'un four de réchauffage par un convoyeur définissant un plan de transport sensiblement horizontal puis en la faisant prendre en charge par un outil au moyen duquel elle est bombée et/ou transférée à un dispositif de bombage et/ou d'évacuation, l'invention consistant dans la détection de la position et l'orientation effectives de la feuille de verre avant sa prise en charge, et le repositionnement de l'outil de prise en charge en fonction de cette position effective. La détection peut consister dans la mesure de l'angle $\alpha$ de décalage entre l'orientation effective suivie par la feuille de verre avant sa prise en charge et l'axe longitudinal du convoyeur et la rotation dudit outil de prise en charge selon cet angle $\alpha$ de manière à le centrer exactement sur la position effective de la feuille de verre. Cette détection peut également consister dans la mesure du décalage transversal par rapport à l'axe longitudinal du four associée à la translation de l'outil de prise en charge d'une manière correspondante à ce décalage transversal. Selon les cas, le repositionnement de l'outil de prise en charge sera donc du type rotation et/ou translation.

Le point de vue est donc ici totalement inversé, ce ne sont plus les feuilles de verre qui sont centrées par rapport à la machine de bombage, mais celle-ci qui est repositionnée de manière adéquate pour chaque feuille de verre. Par définition même, ce procédé est entièrement inoffensif pour les feuilles de verre, laissées libres de leurs mouvements dans le plan de transport. De plus la précision du centrage peut être améliorée car la position initiale de l'outil de prise en charge est connue avec une grande exactitude, soit que la position précédente ait été mémorisée soit plus simplement que l'outil de prise en charge soit replacé entre deux volumes selon une position de référence correspondant par exemple à un alignement parfait. Par ailleurs cet outil de prise en charge peut bien sûr avoir une position asservie mécaniquement et éventuellement très rapidement.

Laisser la feuille de verre entièrement libre de ses mouvements dans le plan de transport du convoyeur ne signifie pas l'absence de toute mesure visant à contrôler sa position ; l'invention n'exclut notamment pas un positionnement correct lors de l'enfournement et un centrage latéral dans celui-ci. Si nécessaire, un centrage frontal peut être également opéré mais uniquement dans la première partie du four de réchauffage, donc à un moment où ce centrage ne peut pas encore entraîner de marquage du verre. Dans la dernière partie du four, la feuille de verre chemine librement et peut dévier de sa trajectoire d'un angle $\alpha$ qui peut atteindre une dizaine de degrés. L'éventuel décalage transversal est lui de l'ordre de quelques millimètres.

L'invention a également pour objet un dispositif de bombage d'une feuille de verre comportant un four de réchauffage traversé par un convoyeur définissant un plan de transport sensiblement horizontal et un outil de prise en charge de la feuille de verre à l'issue de son trajet sur ledit convoyeur, un dispositif de mesure de la position et de l'orientation effectives de la feuille de verre, par exemple de l'angle $\alpha$ entre l'orientation effective de la feuille de verre et l'axe longitudinal du convoyeur et/ou du décalage transversal par rapport à cet axe longitudinal et un moyen pour repositionner ledit outil de prise en charge par exemple pour le faire tourner selon cet angle $\alpha$ ou le faire translater.

Selon un premier mode de réalisation de l'invention, l'outil de prise en charge est constitué d'une machine de bombage comportant un lit de conformation constitué par des tiges conformatrices disposées selon un trajet à profil courbe dans la direction de défilement des feuilles, munie d'un dispositif de repositionnement, notamment de pivotement et/ou de translation. Ce type de machine est décrit notamment dans les brevets français 2 242 219, 2 549 465 et 2 604 992. La machine de bombage est placée juste dans le prolongement du convoyeur traversant le réchauffage. La feuille de verre continuant sa progression dans cette machine, un écart angulaire de quelques degrés à l'entrée du lit de conformation se traduit par une déviation de plusieurs centimètres à la sortie ce qui à la limite rend inopérant les dispositifs à bascule prévus pour transférer les feuilles de verre vers un convoyeur de refroidissement (voir FR-A-2 549 465, EP-A-346 197 et EP-A-346 198) et qui surtout tend à conférer une forme vrillée à la feuille de verre. Or si ce type de machine est généralement utilisé pour des formes considérées comme relativement simples car essentiellement cylindriques, une extrême précision du galbe est néanmoins requise, les vitrages produits étant souvent destinés aux portières automobiles et devant donc coulisser dans une fente étroite pour faire jouer le dispositif de montée-baisse de la glace.

Chaque machine de bombage correspondant à un rayon de courbure donné, il est généralement prévu pour la déplacer un bâti monté sur roues et immobilisé par des appuis au sol en position de travail. Chaque machine de bombage de ce type peut donc être facilement convertie en machine propre à la mise en oeuvre de l'invention par le simple ajout d'un mécanisme de pivotement et éventuellement de translation motorisé, embarqué sur le bâti ou fixé au sol, et de mécanismes de libération des appuis au sol. On peut également utiliser un pont tournant muni de rails grâce auxquels on vient positionner la machine de bombage qui reste fixe par rapport à un sol qui lui pivote.

Selon un second mode de réalisation de l'invention, l'outil de prise en charge est constitué par un élément supérieur de préhension et éventuellement de conformation que nous désignerons par la suite sous le terme "forme supérieure de bombage", suspendu à un dispositif de montée-baisse déplaçable également dans un plan horizontal notamment par rotation selon un axe vertical. De manière bien connue, dans ces techniques de bombage, la forme supérieure de bombage vient saisir la feuille de verre amenée par le convoyeur pour la déposer et/ou la presser sur un élément inférieur que nous désignerons par la suite généralement sous le terme "cadre de bombage". La précision de la position de la feuille de verre par rapport à cette forme supérieure de bombage conditionne les opérations suivantes qu'il s'agisse du largage de la feuille de verre sur un cadre de bombage (cas d'une forme supérieure de bombage plane ou à peine galbée) ou du pressage de la feuille de verre, la forme supérieure de bombage jouant dans ce cas un double rôle de forme de préformage et de presse mâle. Contrairement au cas précédent, il n'y a certes pas à craindre que les écarts s'accumulent au fur et à mesure que progresse l'opération de bombage, mais ces procédés sont toutefois bien moins tolérants : une feuille posée de travers sur le cadre de bombage a toutes les chances de se casser ou à tout le moins d'être marquée et donc mise au rebut alors que dans le cas d'une machine de bombage avec un lit de conformation fait d'éléments tournants, le seul risque est celui d'un non respect du galbe obtenu.

Comme indiqué précédemment, la forme supérieure de bombage est toujours associée à un cadre de bombage. Si le formage comporte une étape de pressage, il est nécessaire de prévoir des moyens de centrage de ce cadre de bombage. Ces moyens peuvent être semblables à ceux équipant la forme supérieure de bombage ou plus simplement être des moyens d'indexation, propres à centrer le cadre par rapport à la forme supérieure de bombage. On peut avantageusement utiliser les moyens décrits dans les brevets ou demandes de brevet US-A-4 781 745 et EP-A-398 315.

Le dispositif de bombage selon l'invention comporte un dispositif de mesure de l'angle $\alpha$ caractéristique du décalage entre la direction effectivement suivie par la feuille de verre et sa direction de consigne, l'axe longitudinal du convoyeur traversant le four de réchauffage. Ce dispositif doit être capable d'effectuer une mesure avec une rapidité suffisante pour que la rotation de l'outil de prise en charge soit terminée lorsque la feuille de verre arrive au niveau de cet outil. Par ailleurs, il a été montré plus haut qu'il importe que la mesure soit effectuée aussi tardivement que possible.

Plusieurs types de dispositifs de mesure peuvent remplir ces conditions. On peut utiliser par exemple des moyens vidéo qui, par analyse morphologique mathématique, vont comparer l'image de la feuille de verre - ou d'une partie caractéristique de celle-ci notamment un coin - avec celle mémorisée d'une feuille de verre correctement positionnée. Ces moyens vidéo sont tout particulièrement bien adaptés dans le cas où les feuilles de verre présentent un bord avant droit mais non perpendiculaire à l'axe longitudinal du convoyeur, ou présentent un bord avant courbe, brisé ou quelconque.

Il peut être également opéré au moyen de plusieurs détecteurs sans contacts, par exemple deux détecteurs pneumatiques analogues à ceux décrits dans la demande de brevet EP-A-348 286, associés à un compte-temps et à une unité de calcul.

D'autres détails et caractéristiques avantageuses de l'invention ressortent de la description faite ci-après en référence aux dessins annexés qui représentent :

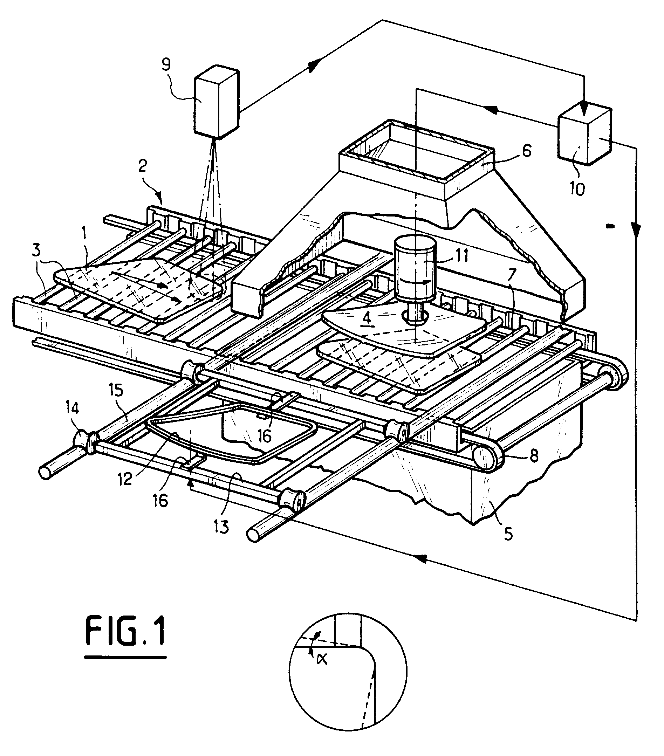

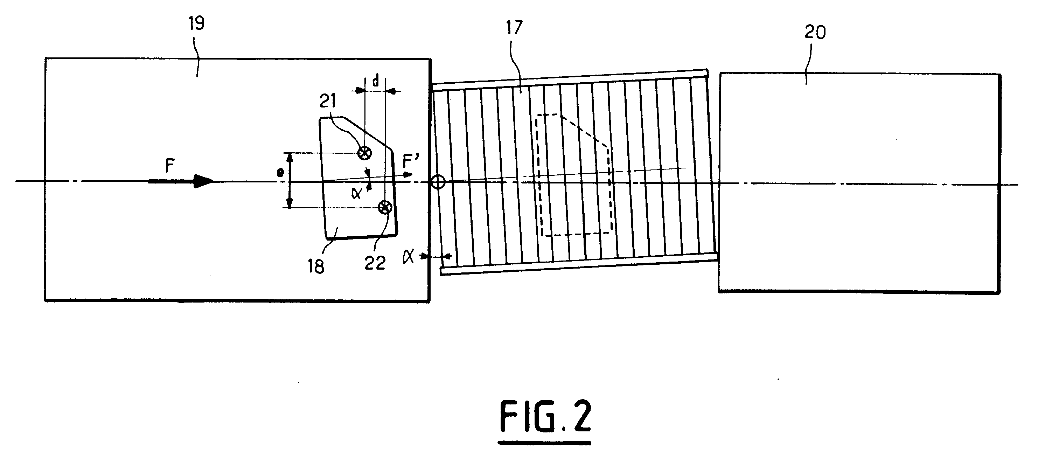

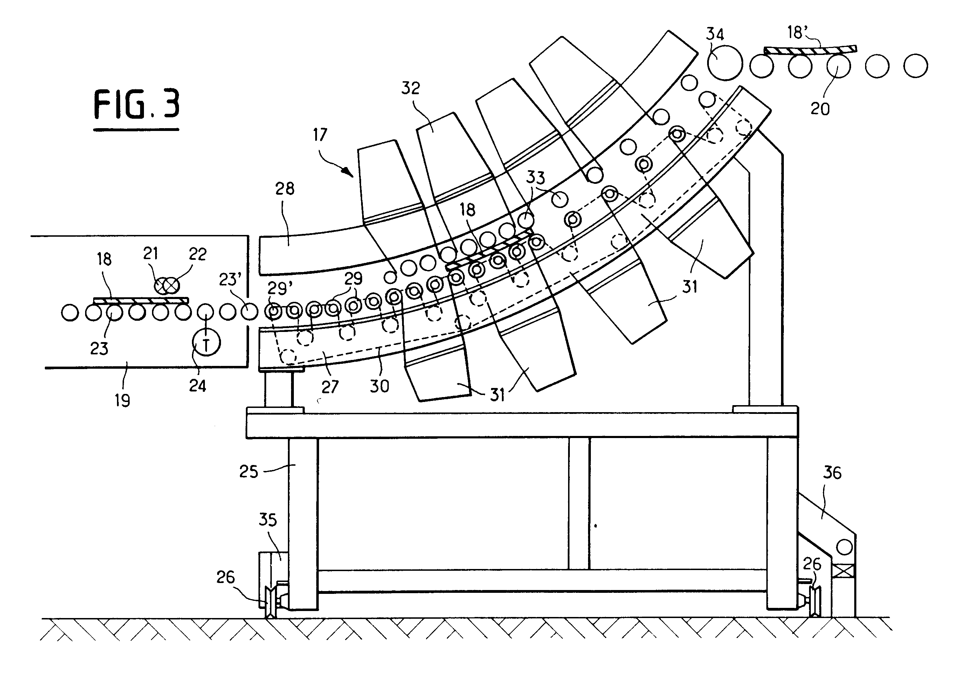

. **figure 1** : un schéma d'une ligne de bombage comportant une forme supérieure de bombage à position angulaire orientée selon la position de la feuille de verre à bomber,
. **figure 2** : un schéma en vue de dessus d'une ligne de bombage avec un lit de conformation orienté dans l'axe des feuilles de verre à bomber,
. **figure 3** : un schéma en vue de côté de la ligne de bombage correspondant à la figure 2.

La figure 1 permet d'illustrer l'application du procédé selon l'invention à une ligne de bombage horizontale comportant une forme supérieure de bombage qui coopère avec un cadre de bombage. Très schématiquement, les étapes du procédé de bombage sont les suivantes : la feuille de verre est chargée sur un convoyeur qui traverse un four de réchauffage où la température du verre est portée à la température de bombage et éventuellement de trempe, c'est-à-dire aux environs de 650-700 °C et qui la

4

conduit sous une forme supérieure de bombage. Là, la feuille de verre est stoppée et déplacée de bas en haut de préférence par une force de nature pneumatique qui vient plaquer la feuille de verre contre ladite forme supérieure de bombage. Cette forme supérieure de bombage est éventuellement bombée pour préformer les feuilles de verre. Après la phase d'application, la feuille de verre est relâchée sur un cadre de bombage constitué par un anneau ouvert en son centre au moyen duquel la feuille de verre est conformée à sa forme définitive. Portée par ce même cadre où après avoir été transférée sur un cadre spécifique, la feuille de verre est finalement menée à un dispositif de refroidissement par exemple de trempe thermique.

Dans le cas schématisé à la figure 1, la feuille de verre 1, déplacée au travers de la ligne par un convoyeur 2 à rouleaux 3 est amenée au contact de la forme supérieure de bombage 4 par un courant gazeux chaud ascendant provenant du conduit inférieur 5 et s'échappant par la cheminée 6. Les détails de la ligne de bombage et plus précisément du circuit d'air chaud sont connus du brevet EP-A-169 770. Bien entendu, l'invention n'est nullement limitée à ce type donné de procédé et l'ascension de la feuille de verre peut être également obtenue au moyen d'une aspiration, au travers de la forme supérieure (EP-A-3 391) ou par une dépression générée à sa périphérie (EP-A-210 418 ou EP-A-241 355).

Les rouleaux 3, par exemple en silice ou autre matériau compatible avec les températures de bombage et de trempe de feuilles de verre, ont une âme emmanchée sur des embouts métalliques 7 qui, en principe, roulent sans glissement sur des bandes sans fin 8 entraînées en rotation à la vitesse voulue de déplacement. En cas d'usure de certaines pièces, l'entraînement d'un rouleau peut être légèrement différent de celui des autres rouleaux, ce qui va conduire à un léger dévirage de la feuille de verre si celle-ci n'admet pas l'axe de la ligne comme axe de symétrie. Par ailleurs, ces rouleaux peuvent être revêtus - au moins pour ce qui est de leur surface de contact avec les feuilles de verre de tissus ou tricots en fibres réfractaires destinés à éviter la formation de piqûres sur la feuille de verre. Là encore, un revêtement usé ou monté de manière légèrement incorrecte peut conduire à un dévirage. Il est vrai qu'il est toujours possible de veiller à l'usure des matériaux et à la correction des interventions, d'autre part il existe d'autres systèmes d'entraînement des rouleaux, moins sujets au problème d'usure évoqués plus haut, mais quelles que soient les précautions prises la priorité première étant donnée à la qualité optique des vitrages, la pratique montre que toutes les feuilles de verre ne suivent pas la trajectoire nominale correspondant à une direction de déplacement indiquée par la flèche F, ce qui dans le cas représenté signifierait un bord avant déplacé en restant rigoureusement parallèle aux axes de rotation des rouleaux. A l'approche de la zone de formage, la feuille de verre est par exemple orientée selon une direction définie par la flèche F' correspondant à une déviation angulaire d'un angle $\alpha$, variable certes d'une feuille de verre à l'autre. La feuille de verre peut de plus être légèrement décalée transversalement.

L'invention consiste dans un premier temps à repérer la position et l'orientation effectives de la feuille de verre ce qui est ici effectué au moyen d'une caméra 9 à grande vitesse montée au-dessus du convoyeur. Pour éviter de les endommager, les pièces électroniques très sensibles à la température (la caméra 9 est disposée dans le four de réchauffage) sont de préférence isolées et reliées à la partie optique par des fibres optiques appropriées. Les images sont immédiatement traitées par une unité de calcul 10, qui par exemple, va opérer en procédant à une comparaison avec des images-types mémorisées ou en utilisant tout autre moyen d'analyse propre à fournir un signal correspondant à cet angle $\alpha$ et/ou au décalage transversal, étant entendu que cette analyse doit être effectuée avec une vitesse suffisamment élevée pour que les outils de bombage soient orientés lorsque la feuille de verre vient s'immobiliser sous la forme supérieure de bombage. Cette réorientation ne peut néanmoins être effectuée qu'après que le volume précédent ait libéré l'outil de prise en charge. Dans le cas d'un bombage avec forme supérieure, cette libération est obtenue lorsque la feuille de verre est transférée sur le cadre de bombage ; dans le cas d'un bombage sur un lit de conformation, cette libération est obtenue dès que la feuille de verre précédente n'est plus en contact avec le convoyeur d'amenée.

La forme supérieure de bombage est équipée d'un dispositif de pivotement 11 qui reçoit un signal de commande de l'unité de calcul 10 de sorte que la forme supérieure de bombage 4 se retrouve exactement à l'aplomb de la feuille de verre quel que soit le décalage angulaire de celle-ci. Il peut être également prévu des moyens propres à assurer une translation de la feuille de verre afin de compenser le décalage transversal. Si la dans le cas d'un bombage sur un lit de conformation, cette libération est obtenue dès que la feuille de verre précédente n'est plus en contact avec le convoyeur d'amenée.

La forme supérieure de bombage est équipée d'un dispositif de pivotement 11 qui reçoit un signal de commande de l'unité de calcul 10 de sorte que la forme supérieure de bombage 4 se retrouve exactement à l'aplomb de la feuille de verre quel que soit le décalage angulaire de celle-ci. Il peut être également prévu des moyens propres à assurer une translation de la feuille de verre afin de compenser le décalage transversal. Si la feuille de verre est ensuite simplement larguer sur un cadre de bombage sans pressage, la seule orientation de la forme supérieure de bombage peut suffire à l'obtention d'un vitrage parfaitement au galbe ; si par contre il est prévu une opération de pressage ou si la précision requise le demande, on peut prévoir une orientation du cadre. Il est aussi possible de ramener la forme supérieure systématiquement vers une position de référence correspondant à un alignement exact par rapport au cadre de pressage.

Ce cadre est constitué par un rail continu 12 porté par un chariot 13 dont les roues 14 se déplacent sur des rails 15 s'étendant parallèlement aux rouleaux 3. La fixation du cadre 12 sur le chariot 13 est obtenue au moyen de goujons 16. Pour l'orientation du cadre, ces goujons 16 sont montés sur des articulations. Dans le cas ici schématisé une de ces articulations est assujettie à un mécanisme de pivotement commandé par l'unité de calcul 10. Le cadre peut également être auto-centrable, c'est-à-dire équipé de moyens d'indexation coopérant avec des éléments solidaires de la forme de bombage.

Après son bombage, la feuille de verre est conduite vers un poste de refroidissement généralement du type trempe thermique ici non représenté. L'invention assure la production de vitrages d'une qualité optique particulièrement élevée car la feuille de verre ne subit pas d'intervention destinée à la recentrer dans la zone de formage. Par ailleurs, la feuille de verre étant toujours bien positionnée par rapport aux outils de bombage, cette bonne qualité optique est associée à une bonne qualité du formage proprement dit, donc une reproductibilité des formes produites.

La figure 2 illustre un autre mode de réalisation de l'invention qui est cette fois mise en oeuvre dans le cadre d'une ligne de bombage dont l'outil de bombage est essentiellement constitué par une portion du convoyeur définissant un lit de conformation courbe dans le sens de défilement de la feuille de verre (voir par exemple FR-A-2 442 219, FR-A-2 549 465). Dans ce cas, c'est toute cette portion 17 du convoyeur qui va être réalignée par rapport à la direction effectivement suivie par la feuille de verre 18 à proximité de la sortie du four 19. Cette orientation ne concerne toutefois que la portion 17 et il est inutile de réorienter le convoyeur de refroidissement secondaire 20 qui de toute façon ne reçoit que des feuilles de verre déjà trempées donc dont la température exclut toute possibilité de déformation ultérieure.

A noter que si le lit de conformation est cylindrique, le déplacement latéral n'est pas gênant, seule la rotation est donc nécessaire à une bonne orientation de la machine de bombage. Dans le cas de la figure 2, la valeur de l'angle $\alpha$ n'est pas déterminée au moyen d'une caméra mais de deux détecteurs sans contact 21, 22, par exemple semblables aux détecteurs pneumatiques décrits dans la demande de brevet EP-A-348 266. Dès qu'un premier détecteur "voit" le bord avant de la feuille de verre défilant à une vitesse V, mesurée par un tachymètre dont est équipé un des rouleaux de cette zone de détection, il déclenche l'incrémentation d'un compteur. Cette incrémentation, effectuée avec un pas de comptage p de par exemple 5/10 000 de seconde, est stoppée quand le second détecteur voit à son tour le bord avant. Si P pas ont été comptabilisés, la distance sur l'axe longitudinal entre les deux bords avants repérés est donc égale à L = P.p.V. Dans l'hypothèse où le volume de verre présente un bord avant droit sensé être parallèle aux génératrices des rouleaux, cette distance peut également s'exprimer L = d + etg$\alpha$ où $\alpha$ est l'angle que forme le bord avant avec une génératrice d'un rouleau, e la distance sur l'axe transversal entre les deux détecteurs, d la distance sur l'axe longitudinal entre les deux détecteurs. La valeur de l'angle $\alpha$ est donc donnée par le calcul :

$$\alpha = \text{arctg } \frac{L-d}{e} = \text{arctg } \frac{P.p.V-d}{e}$$

La machine de bombage doit donc être tournée de la valeur de cet angle, dans le sens trigonométrique si L est supérieur à d et dans le sens inverse dans le cas contraire.

Le mode d'orientation de la machine est plus particulièrement visible à la figure 3 où elle est schématisée en vue de côté. Sur cette figure on a indiqué à nouveau en 19 le four de réchauffage traversé par un convoyeur 23 à rouleaux. La feuille de verre 18 est repérée par les détecteurs 21 et 22, la vitesse du convoyeur est contrôlée par le tachymètre 24. La machine de bombage correspondant à la portion mobile 17 est toute entière montée sur un bâti 25 déplaçable au moyen de roues 26. Ce bâti 25 porte deux arceaux 27 et 28 en arc de cercle qui définissent un chemin curviligne dont la feuille de verre 18 suit la courbure. L'arceau inférieur 27 sert de support à l'ensemble de rouleaux inférieurs 29 entraînés en rotation par une chaîne 30. Dans le cas schématisé, le premier rouleau 29' est exactement dans l'alignement du dernier rouleau 23' du four 19, l'entrée de la feuille de verre 18 dans la machine de bombage 17 s'effectue ainsi sans à coup. La zone de bombage proprement dite correspond aux sept premiers rouleaux. Au-delà, la feuille de verre pénètre dans la zone de trempe pourvue de quatre caissons inférieurs 31 et de quatre caissons supérieurs 32. Dans cette zone de trempe, la progression du verre est aidé par des éléments de maintien supérieurs 33. Après la zone de trempe, les feuilles de verre bombées et trempées 18' sont prises en charge par un dispositif de basculement 34 qui les déposent sur le convoyeur 20 de refroidissement secondaire.

L'orientation de la machine selon l'angle α mesuré au moyen des détecteurs 21, 22 et de l'unité de calcul est obtenue grâce à un mécanisme de pivotement 35, auquel est associé un mécanisme de motorisation du pivotement 36. Dans le cas ici représenté le mécanisme de pivotement 35 est embarqué sur le bâti 25, mais il peut être également logé sous le sol. Toutefois on choisira systématiquement la solution embarquée lorsqu'une translation est prévue. Par ailleurs, les mécanismes de pivotement 35 et de motorisation 36 commandent également des moyens de blocage et de libération des appuis au sol de la machine de bombage.

## Revendications

1. Procédé de bombage d'une feuille de verre dans lequel la feuille de verre (1, 18) est acheminée au travers d'un four de réchauffage (19) par un convoyeur (2, 23) définissant un plan de transport sensiblement horizontal puis est prise en charge par un outil (4, 17) au moyen duquel la feuille de verre (1, 18) est bombée et/ou transférée à un dispositif de bombage et/ou d'évacuation, **caractérisé par** la détection de la position et de l'orientation effectives de la feuille de verre (1, 18) avant sa prise en charge et le repositionnement de l'outil (4, 17) de prise en charge en fonction de ladite position effective.

2. Procédé de bombage selon la revendication 1, **caractérisé par** la mesure de l'angle α de décalage entre l'orientation effective (F') de la feuille de verre (1, 18) avant sa prise en charge et l'axe longitudinal (F) du convoyeur et la rotation dudit outil de prise en charge (4, 17) selon cet angle α de manière à le centrer exactement sur la position effective de la feuille de verre.

3. Procédé de bombage selon la revendication 1 ou 2, **caractérisé par** la mesure du décalage transversal par rapport à l'axe longitudinal du convoyeur et la translation dudit outil de prise en charge (4, 17) conformément à celui-ci.

4. Procédé de bombage selon l'une des revendications 1 à 3, **caractérisé en ce que** ledit outil (17) est constitué par un lit de conformation, constitué par des tiges conformatrices (29) disposées selon un trajet à profil courbe dans la direction de défilement des feuilles, muni d'un dispositif de positionnement (26, 35, 36).

5. Procédé de bombage selon l'une des revendications 1 à 3, **caractérisé en ce que** ledit outil (4) est constitué par une forme supérieure de bombage et que le dispositif de bombage et/ou d'évacuation est constitué par un cadre de bombage (12).

6. Procédé de bombage selon la revendication 5, **caractérisé en ce que** la forme supérieure de bombage (4) est replacée selon une position de référence avant le transfert de la feuille de verre (1) sur le cadre de bombage (12).

7. Procédé de bombage selon la revendication 5, **caractérisé en ce que** le cadre de bombage (12) est également centré sur la position effective de la feuille de verre (1).

8. Procédé de bombage selon la revendication 7, **caractérisé en ce que** le cadre de bombage (12) est indexé sur la forme supérieure de bombage (4).

9. Procédé de bombage selon l'une des revendications précédentes, **caractérisé en ce que** la position de la feuille de verre (1, 18) est mesurée par des moyens optiques (9) donnant une image de toute ou fraction de la feuille de verre.

10. Procédé de bombage selon l'une des revendications 1 à 9, **caractérisé en ce que** la position de la feuille de verre (1, 18) est mesurée au moyen de plusieurs détecteurs sans contact (21, 22).

11. Dispositif de bombage d'une feuille de verre (1, 18) comportant un four de réchauffage (19) traversé par un convoyeur (2, 23) définissant un plan de transport sensiblement horizontal et un outil (4, 17) de

EP 0 493 204 B1

prise en charge de la feuille de verre à l'issue de son trajet sur ledit convoyeur, **caractérisé par** un dispositif de mesure (9, 21, 22, 24) de la position et de l'orientation effectives de la feuille de verre et un moyen (11, 26, 35, 36) pour repositionner ledit outil de prise en charge (4, 17) selon cette position.

**12.** Dispositif de bombage selon la revendication 11, **caractérisé en ce que** ledit dispositif de mesure de ladite position de la feuille de verre est une caméra (9) dont la partie optique est montée dans le four, au-dessus du convoyeur (2) et la partie électronique (10) d'analyse d'images est montée hors du four.

**13.** Dispositif de bombage selon la revendication 11, **caractérisé en ce que** ledit dispositif de mesure est constitué par plusieurs détecteurs sans contact (21, 22) associés à un compte-temps et à une unité de calcul.

**14.** Dispositif de bombage selon l'une des revendications 11 à 13, **caractérisé en ce que** l'outil (17) de prise en charge de la feuille de verre est une machine de bombage comportant un lit de conformation, constitué par des tiges conformatrices (29) disposées selon un trajet à profil courbe dans la direction de défilement des feuilles (18), munie d'un dispositif de repositionnement (26, 35, 36).

**15.** Dispositif de bombage selon la revendication 14, **caractérisé en ce que** ladite machine de bombage (17) est montée sur un bâti (25) déplaçable en rotation par un mécanisme de pivotement (35).

**16.** Dispositif de bombage selon la revendication 14 ou 15, **caractérisé en ce que** ladite machine de bombage est montée sur un bâti (25) déplaçable en translation par rapport à l'axe longitudinal du convoyeur.

**17.** Dispositif de bombage selon l'une des revendications 14 à 16, **caractérisé en ce que** ladite machine de bombage est montée sur un pont tournant.

**18.** Dispositif de bombage selon l'une des revendications 11 à 13, **caractérisé en ce que** l'outil (4) de prise en charge de la feuille de verre est une forme supérieure de bombage suspendue à un dispositif de montée-baisse déplaçable dans un plan horizontal.

**19.** Dispositif de bombage selon la revendication 18, **caractérisé en ce que** le cadre de bombage (12) sur lequel la feuille de verre (1) est transférée après avoir été prise en charge par la forme supérieure de bombage est muni d'un dispositif de positionnement (16).

**20.** Dispositif de bombage selon la revendication 19, **caractérisé en ce que** ledit cadre de bombage (12) est muni de moyens d'indexage par rapport à la forme supérieure de bombage.

**Claims**

**1.** Method of bending a glass sheet, in which the glass sheet (1, 18) is fed through a reheating furnace (19) by a conveyor (2, 23) defining a substantially horizontal transport plane, then is taken over by a tool (4, 17), by means of which the glass sheet (1, 18) is bent and/or transferred to a bending and/or discharge device, characterized by the detection of the effective position and effective orientation of the glass sheet (1, 18) before it is taken over and the repositioning of the taking-over tool (4, 17) as a function of said effective position.

**2.** Method of bending according to Claim 1, characterized by the measurement of the angle $\alpha$ of offset between the effective orientation (F') of the glass sheet (1, 18) before it's taking-over and the longitudinal axis (F) of the conveyor and the rotating of said taking-over tool (4, 17) through this angle $\alpha$ in such a way as to centre it exactly on the effective position of the glass sheet.

**3.** Method of bending according to Claim 1 or 2, characterized by the measurement of the transverse shift relative to the longitudinal axis of the conveyor and the translation of said taking-over tool (4, 17) in conformity therewith.

**4.** Method of bending according to one of Claims 1 to 3, characterized in that said tool (17) is constituted of a shaping bed, composed of shaping rods (29) disposed along a path having a profile that is curved

8

in the direction of travel of the sheets, provided with a positioning device (26, 35, 36).

5. Method of bending according to one of Claims 1 to 3, characterized in that said tool (4) is composed of an upper bending mould and that the bending and/or discharge device is composed of a bending frame (12).

6. Method of bending according to Claim 5, characterized in that the upper bending mould (4) is repositioned according to a reference position before the transfer of the glass sheet (1) onto the bending frame (12).

7. Method of bending according to Claim 5, characterized in that the bending frame (12) is also centred on the effective position of the glass sheet (1).

8. Method of bending according to Claim 7, characterized in that the bending frame (12) is indexed onto the upper bending mould (4).

9. Method of bending according to one of the preceding Claims, characterized in that the position of the glass sheet (1, 18) is measured by optical means (9) giving an image of the whole or a portion of the glass sheet.

10. Method of bending according to one of Claims 1 to 9, characterized in that the position of the glass sheet (1, 18) is measured by means of several contactless detectors (21, 22).

11. Device for bending a glass sheet (1, 18), comprising a reheating furnace (19) through which pass a conveyor (2, 23) defining a substantially horizontal transport plane and a tool (4, 17) for taking over the glass sheet at the end of its passage along said conveyor, characterized by a device (9, 21, 22, 24) for measuring the effective position and effective orientation of the glass sheet and a means (11, 26, 35, 36) for repositioning said taking-over tool (4, 17) in accordance with this position.

12. Bending device according to Claim 11, characterized in that said device for measuring said position of the glass sheet is a camera (9), the optical part of which is mounted in the furnace above the conveyor (2) and the electronic part (10) for analysing images of which is mounted outside the furnace.

13. Bending device according to Claim 11, characterized in that said measuring device is constituted of several contactless detectors (21, 22) associated with a time counter and a calculating unit.

14. Bending device according to one of Claims 11 to 13, characterized in that the taking-over tool (17) for the glass sheet is a bending machine comprising a shaping bed, composed of shaping rods (29) disposed along a path having a profile that is curved in the direction of travel of the sheets (18), equipped with a repositioning device (26, 35, 36).

15. Bending device according to Claim 14, characterized in that said bending machine (17) is mounted on a frame (25) displaceable in rotation by a pivot mechanism (35).

16. Bending device according to Claim 14 or 15, characterized in that said bending machine is mounted on a frame (25) displaceable in translation with respect to the longitudinal axis of the conveyor.

17. Bending device according to one of Claims 14 to 16, characterized in that said bending machine is mounted on a revolving bridge.

18. Bending device according to one of Claims 11 to 13, characterized in that the taking-over tool (4) for the glass sheet is an upper bending mould, suspended from a raising and lowering device displaceable in a horizontal plane.

19. Bending device according to Claim 18, characterized in that the bending frame (12) onto which the glass sheet (1) is transferred after having been taken over by the upper bending mould is provided with a positioning device (16).

**20.** Bending device according to Claim 19, characterized in that said bending frame (12) is provided with means for indexing relative to the upper bending mould.

**Patentansprüche**

**1.** Verfahren zum Biegen einer Glasscheibe, bei welchem die Glasscheibe (1, 18) von einem Förderer (2, 23), der eine im wesentlichen horizontale Transportebene bildet, durch einen Erwärmungsofen (19) transportiert und anschließend von einem Werkzeug (4, 17) aufgenommen wird, mittels dessen die Glasscheibe (1, 18) gebogen und/oder einer Biege- und/oder Entnahmevorrichtung übergeben wird, **dadurch gekennzeichnet, daß** die tatsächliche Lage und Ausrichtung der Glasscheibe (1, 18) vor ihrer Aufnahme und die Neupositionierung des Aufnahmewerkzeugs (4, 17) in Abhängigkeit von dieser tatsächlichen Lage bestimmt werden.

**2.** Biegeverfahren nach Anspruch 1, **dadurch gekennzeichnet, daß** der Abweichungsswinkel $\alpha$ zwischen der tatsächlichen Ausrichtung (F') der Glasscheibe (1, 18) vor ihrer Aufnahme und der Längsachse (F) des Förderers und die Drehung des Aufnahmewerkzeugs (4, 17) entsprechend diesem Winkel $\alpha$ derart gemessen werden, daß es genau auf die tatsächliche Lage der Glasscheibe zentriert wird.

**3.** Biegeverfahren nach Anspruch 1 oder 2, **dadurch gekennzeichnet, daß** die Querabweichung in bezug auf die Längsachse des Förderers und die dieser entsprechende Translation des Aufnahmewerkzeugs (4, 17) gemessen werden.

**4.** Biegeverfahren nach einem der Ansprüche 1 bis 3, **dadurch gekennzeichnet, daß** das Werkzeug (17) aus einem Formgebungsbett gebildet ist, das aus Formgebungswellen (29) besteht, die gemäß einer Bahn mit in Durchlaufrichtung der Glasscheiben gekrümmtem Profil angeordnet sind, und das mit einer Positioniereinrichtung (26, 35, 36) ausgerüstet ist.

**5.** Biegeverfahren nach einem der Ansprüche 1 bis 3, **dadurch gekennzeichnet, daß** das Werkzeug (4) aus einer oberen Biegeform **und daß** die Biege- und/oder Entnahmevorrichtung aus einem Biegerahmen (12) gebildet ist.

**6.** Biegeverfahren nach Anspruch 5, **dadurch gekennzeichnet, daß** die obere Biegeform (4) vor der Übergabe der Glasscheibe (1) auf den Biegerahmen (12) gemäß einer Bezugsposition neu positioniert wird.

**7.** Biegeverfahren nach Anspruch 5, **dadurch gekennzeichnet, daß** der Biegerahmen (12) auch auf die tatsächliche Lage der Glasscheibe (1) zentriert wird.

**8.** Biegeverfahren nach Anspruch 7, **dadurch gekennzeichnet, daß** der Biegerahmen (12) auf die obere Biegeform (4) eingerastet wird.

**9.** Biegeverfahren nach einem der vorhergehenden Ansprüche, **dadurch gekennzeichnet, daß** die Lage der Glasscheibe (1, 18) mit optischen Mitteln (9) gemessen wird, die ein vollständiges oder teilweises Abbild der Glasscheibe ergeben.

**10.** Biegeverfahren nach einem der Ansprüche 1 bis 9, **dadurch gekennzeichnet, daß** die Lage der Glasscheibe (1, 18) von mehreren berührungslosen Detektoren (21, 22) gemessen wird.

**11.** Vorrichtung zum Biegen einer Glasscheibe (1, 18), umfassend einen Erwärmungsofen (19), welcher von einem Förderer (2, 23) durchlaufen wird, der eine im wesentlichen horizontale Transportebene bildet, und ein Werkzeug (4, 17) zur Aufnahme der Glasscheibe ab ihrer Bahn auf dem Förderer, **gekennzeichnet durch** eine Meßeinrichtung (9, 21, 22, 24) für die tatsächliche Lage und Ausrichtung der Glasscheibe und ein Mittel (11, 26, 35, 36) zur Neupositionierung des Aufnahmewerkzeugs (4, 17) entsprechend dieser Lage.

**12.** Biegevorrichtung nach Anspruch 11, **dadurch gekennzeichnet, daß** die Meßeinrichtung für die Lage der Glasscheibe eine Kamera (9) ist, deren optischer Teil über dem Förderer (2) im Ofen und deren Elektronikteil (10) für die Bildauswertung außerhalb des Ofens befestigt ist.

**13.** Biegevorrichtung nach Anspruch 11, **dadurch gekennzeichnet, daß** die Meßeinrichtung aus mehreren berührungslosen Detektoren (21, 22), die mit einer Zeitmessung und einer Rechenanlage verbunden sind, gebildet ist.

**14.** Biegevorrichtung nach einem der Ansprüche 11 bis 13, **dadurch gekennzeichnet, daß** das Aufnahmewerkzeug (17) für die Glasscheibe eine Biegemaschine ist, umfassend ein Formgebungsbett, das aus Formgebungswellen (29) besteht, die gemäß einer Bahn mit in Durchlaufrichtung der Glasscheiben (18) gekrümmtem Profil angeordnet sind, und das mit einer Positioniereinrichtung (26, 35, 36) ausgerüstet ist.

**15.** Biegevorrichtung nach Anspruch 14, **dadurch gekennzeichnet, daß** die Biegemaschine (17) auf einem durch einen Schwenkmechanismus (35) drehbeweglichen Rahmen (25) befestigt ist.

**16.** Biegevorrichtung nach Anspruch 14 oder 15, **dadurch gekennzeichnet, daß** die Biegemaschine auf einem in bezug auf die Längsachse des Förderers translationsbeweglichen Rahmen (25) befestigt ist.

**17.** Biegevorrichtung nach einem der Ansprüche 14 bis 16, **dadurch gekennzeichnet, daß** die Biegemaschine auf einer Drehbrücke befestigt ist.

**18.** Biegevorrichtung nach einem der Ansprüche 11 bis 13, **dadurch gekennzeichnet, daß** das Aufnahmewerkzeug (4) für die Glasscheibe eine obere Biegeform ist, die an einer in einer horizontalen Ebene beweglichen Hub-Senk-Einrichtung aufgehängt ist.

**19.** Biegevorrichtung nach Anspruch 18, **dadurch gekennzeichnet, daß** der Biegerahmen (12), auf welchen die Glasscheibe (1) übergeben wird, nachdem sie von der oberen Biegeform aufgenommen worden ist, mit einer Positioniereinrichtung (16) ausgerüstet ist.

**20.** Biegevorrichtung nach Anspruch 19, **dadurch gekennzeichnet, daß** der Biegerahmen (12) mit Rastmitteln in bezug auf die obere Biegeform ausgerüstet ist.

**FIG.1**

**FIG.2**

FIG. 3